# EUROPEAN PATENT APPLICATION

(11) **EP 2 608 594 A1**
(43) Date of publication of application: **26.06.2013**
(21) Application number: 11818141.1
(22) Date of filing: 11.08.2011
(51) Int. Cl.: H04W 16/26, H04B 7/15, H04W 28/02, H04W 72/04

(54) **RELAY TRANSMISSION METHOD, RELAY NODE, AND WIRELESS BASE STATION**

(30) Priority: 16.08.2010 JP 2010181910
(71) Applicant: NTT DOCOMO, INC., Chiyoda-ku Tokyo 100-6150 (JP)
(72) Inventor: NAGATA, Satoshi, Tokyo 100-6150 (JP); ABE, Tetsushi, Tokyo 100-6150 (JP)
(74) Representative: HOFFMANN EITLE
(86) International application number: PCT/JP2011/068397
(87) International publication number: WO 2012/023499

(57) **Abstract**

Provided is a radio communication system using a relay transmission technique capable of optimizing use of radio resources in a radio base station and preventing reduction in capacity of the whole system. The relay frequency allocation method of the present invention has the steps of: radio base stations (10a) and (10b) transmitting downlink data to a relay station (30) using respective backhaul links established between the relay station (30) and the radio base stations (10a) and (10b); and the relay station (30) transmitting the downlink data received from the radio base stations (10a) and (10b), to a relay terminal (20b) by using an access link established between the relay station (30) and the relay terminal (20b).

## Description

### Technical Field

The present invention relates to a relay transmission method, a relay station and a radio base station.

### Background Art

In 3GPP (3^{rd} Generation Partnership Project), standardization of LTE-Advanced (LTE(Long Term Evolution)-A) has been fostered as the 4^{th} generation mobile communication system to realize further higher-speed and larger-capacity communications than LTE which is development standard in the 3^{rd} generation mobile communication system. LTE-A has important issues to improve throughputs of cell-edge users as well as to realize higher-speed and larger-capacity communications, and as a way of this, study has been made of a relay transmission technique for relaying radio communications between a radio base station and a mobile terminal by a relay station. With use of this relay transmission technique, it is expected to extend the coverage effectively.

The relay transmission technique includes layer 1 relay, layer 2 relay and layer 3 relay. The layer 1 relay is an AF (Amplifier and Forward) type relay technique of performing power amplification of downlink reception RF signals from a radio base station and transmitting the signals to a mobile terminal. This technique is called booster or repeater. In this technique, uplink reception RF signals from the mobile terminal are also power-amplified in the same manner and transmitted to the radio base station. The layer 2 relay is a DF (Decode and Forward) type relay technique of performing demodulation and decoding of downlink reception RF signals from the radio base station, then performing coding and modulation of the signals again and transmitting the signals to the mobile terminal. The layer 3 relay is a relay technique of performing demodulating and decoding on downlink reception RF signals from the radio base station, then, reproducing user data, performing the processing for radio-transmitting user data again (cyphering, user data division and combining processing and so on), performing coding and modulating of the signals and then transmitting the signals to the mobile terminal. Now in 3GPP, in view of improvement of reception performance by noise cancellation and study of standard specification and easy implementation, standardization has been advanced of the layer 3 relay.

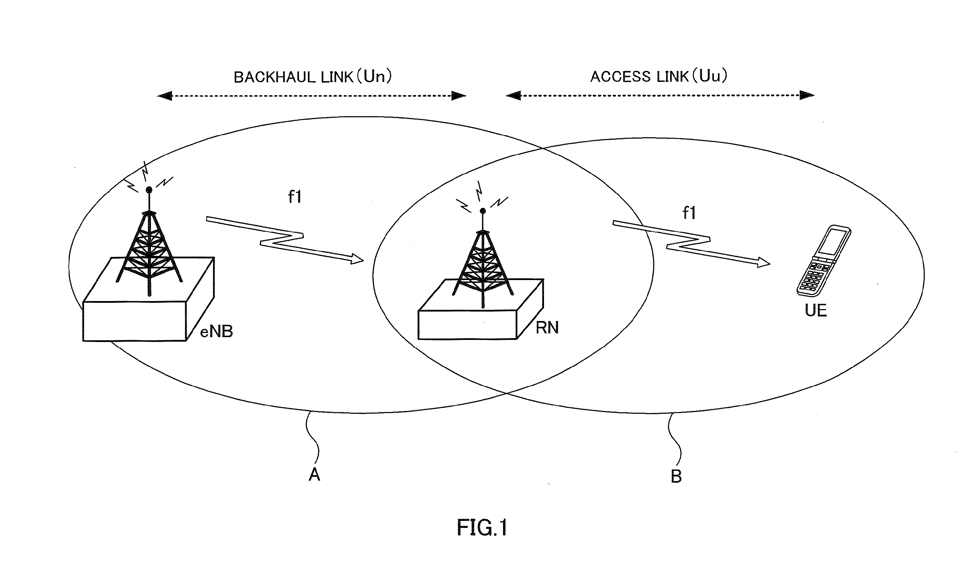

Fig. 1 is a diagram illustrating an overview of the layer 3 relay. A relay station (RN) of the layer 3 relay is characterized by not only performing user data reproducing processing, modulation and demodulation, coding and decoding processing but also having a specific cell ID (PCI: Physical Cell ID) which is different from that of a radio base station (eNB). With this characteristic, a mobile terminal (UE) recognizes a cell B provided by the relay station as a cell different from the cell A provided by the radio base station. And, control signals of the physical layer such as CQI (Channel Quality Indicator) and HARQ (Hybrid Automatic Repeat reQuest) are terminated at the relay station. Therefore, the relay station is recognized as a radio base station seen from the mobile terminal. In view of this, mobile terminals having only LTE functions are also allowed to be connected to the relay station.

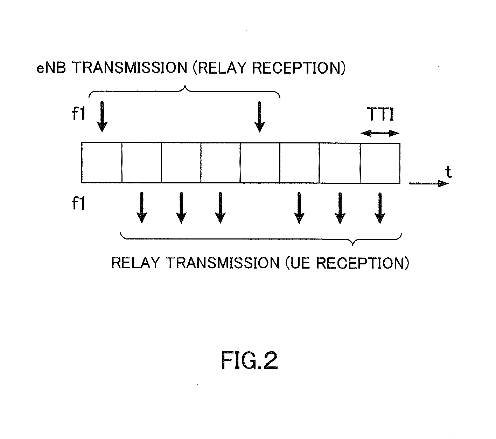

And, it is considered that the backhaul link as a radio link between the radio base station and the relay station and the access link between the relay station and the mobile terminal are used at different frequencies or same frequencies. In the latter case, when the transmission processing and reception processing are performed simultaneously by the relay station, transmission signals loop around to the receiver of the relay station, which causes interference unless sufficient isolation is assured between transmission and reception circuits. Therefore, as illustrated in Fig. 2, when both the links are used at the same frequencies (f1), radio resources of the backhaul link and the access link (eNB transmission and relay transmission) are subjected to TDM (Time Division Multiplexing) and controlled in such a manner as to prevent transmission and reception from being performed simultaneously at the relay station (Non Patent Literature 1). In view of this, for example, on the downlink, the relay station is prevented from transmitting downlink signals to the mobile terminal while it receives downlink signals from the radio base station.

### Citation List

### Non Patent Literature

Non-Patent Literature 1: 3GPP, TS36.814

### Summary of Invention

### Technical Problem

In the radio communication system using the relay transmission technique as described above, there are demands for optimizing use of radio resources in the radio base station and preventing the reduction in capacity of the entire system.

The present invention was carried out in view of the foregoing and aims to provide a relay transmission method, a relay station and a radio base station which are all capable of, in a radio communication system using a relay transmission technique, optimizing use of radio resources in the ratio base station and preventing reduction in capacity of the entire system.

### Solution to Problem

A first aspect of the present invention is a relay transmission method comprising the steps of: transmitting, at each of a plurality of radio base stations, downlink data to a relay station by using a first radio link established between each of the plurality of radio base station and the relay station; and transmitting, at the relay station, the downlink data received from each of the plurality of radio base stations, to a mobile terminal by using a second radio link established between the relay station and the mobile terminal.

A second aspect of the present invention is a relay station comprising: a receiving section configured to receive downlink data from each of a plurality of radio base stations by using a first radio link established between each of the plurality of radio base stations and the relay station; and a transmitting section configured to transmit downlink data received from each of the plurality of radio base stations to a mobile terminal by using a second radio link established between the relay station and the mobile terminal.

A third aspect of the present invention is a radio base station comprising: a determining section configured to determine distribution of downlink data from a plurality of radio base stations to a relay station; and a transmitting section configured to transmit the downlink data distributed to the radio base station by the determining section, to the relay station by using a radio link established between the relay station and the radio base station.

### Advantageous Effects of Invention

According to the present invention, it is possible to provide a relay transmission method, a relay station and a radio base station that are all capable of, in a radio communication system using a relay transmission technique, optimizing use of radio resources in the ratio base station and preventing reduction in capacity of the entire system.

### Brief Description of Drawings

Fig. 1 is a diagram for explaining a relay transmission technique;
Fig. 2 is a diagram for explaining radio resources of backhaul link and access link;
Fig. 3 provides diagrams for explaining reduction in radio resources that can be allocated to a macro terminal;
Fig. 4 is a diagram for explaining a relay transmission method according to the present invention;
Fig. 5 is a diagram for explaining the relay transmission method according to the present invention;
Fig. 6 is a block diagram illustrating a configuration of a radio base station according to an embodiment of the present invention;
Fig. 7 is a block diagram illustrating a configuration of a relay station according to the embodiment of the present invention; and
Fig. 8 is a block diagram illustrating a configuration of a macro terminal according to the embodiment of the present invention.

### Description of Embodiments

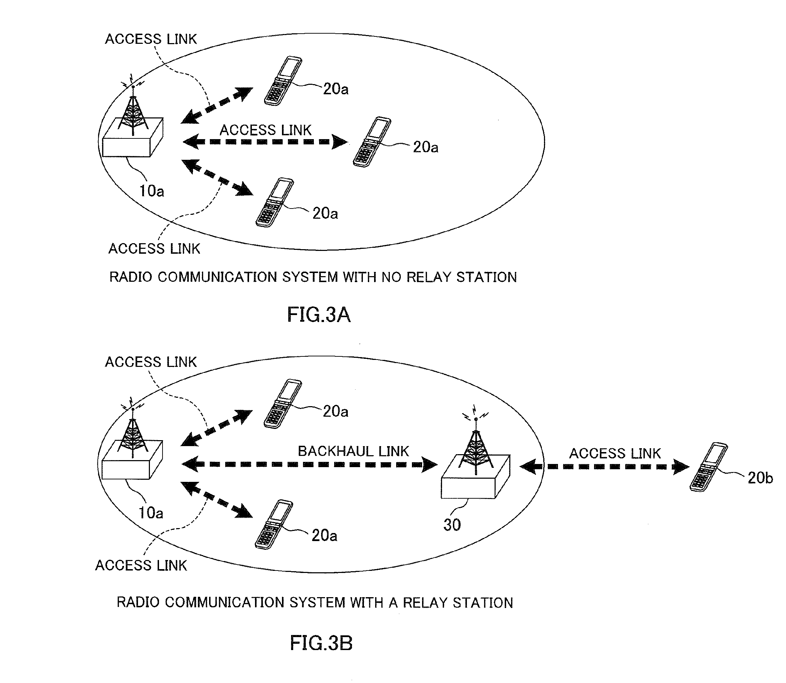

In the LTE-A system, as illustrated in Fig. 3A, a radio base station 10a performs radio communication with a mobile terminal 20a by using an access link which is a radio link established between the radio base station 10a and the mobile terminal 20a. Further, in the LTE-A system, as illustrated in Fig. 3B, the radio base station 10a performs radio communication with the mobile terminal 20a by using an access link. In addition, for the purpose of improving the throughput of a cell-edge mobile terminal 20b, the radio base station 10a performs relay communication with a mobile terminal 20b via a relay station by using a backhaul link that is a radio link established between the radio base station 10a and the relay station 30 and an access link that is a radio link established between the relay station 30 and the mobile terminal 20b.

In the following, for ease of explanation, the mobile terminal 20a performing direct radio communication with the radio base station 10a is referred to as a macro terminal 20a and the mobile terminal 20b performing relay communication with the radio base station 10a via the relay station 30 is referred to as a relay terminal 20b. And, the macro terminal 20a and the relay terminal 20b have the same configurations and when they are described indiscriminately, they are collectively referred to as mobile terminals 20.

In this LTE-A system, the radio base station 10a illustrated in Fig. 3B needs to allocate not only radio resources for the access link between the radio base station 10a and the macro terminal 20a and but also radio resources for the backhaul link between the radio base station 10a and the relay station 30. Accordingly, in the case illustrated in Fig. 3B, the radio resources that can be allocated to the macro terminal 20a are sometimes reduced as compared with the case illustrated in Fig. 3A, which may cause reduction in capacity of the entire system,.

The present inventors have noted that when the radio base station 10a performs direct radio communication with the macro terminal 20a and relay communication with the relay terminal 20b via the relay station 30 as described above, the radio resources that can be allocated to the macro terminal 20a are reduced as compared with the case where relay communication is not performed, and have finally completed the present invention.

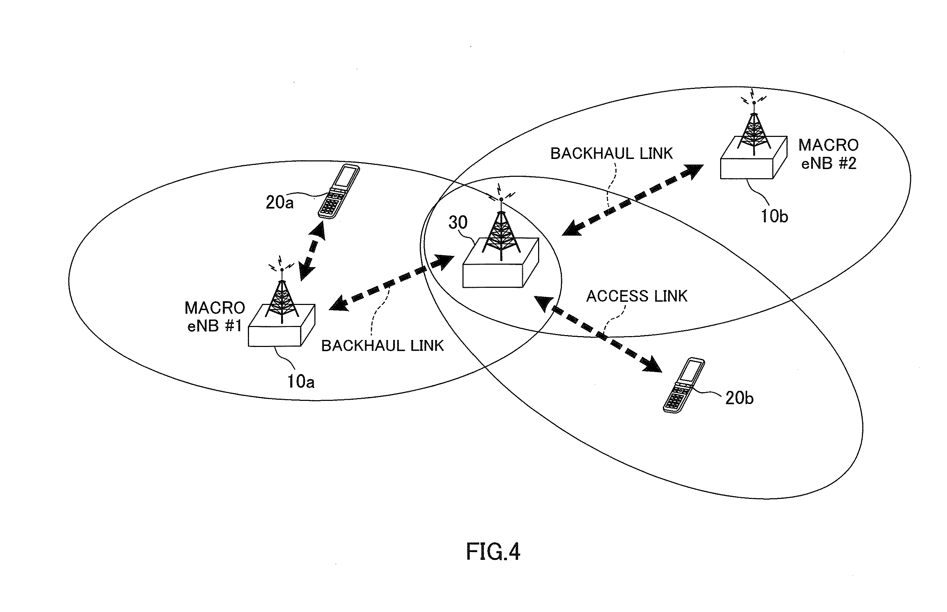

In the relay transmission method according to the present invention, as illustrated in Fig. 4, the backhaul links (first radio links) are established between the plural radio base stations 10a and 10b and the relay station 30 and the access link (second radio link) is established between the relay station 30 and the relay terminal 20b. The radio base stations 10a and 10b transmit downlink data to the relay station 30 by using the backhaul links established respectively. The relay station 30 transmits the downlink data received from the radio base stations 10a and 10b, to the relay terminal 20b by using the access link.

According to this relay transmission method, the plural radio base stations 10a and 10b transmit the downlink data to the relay station 30 by using the backhaul links, respectively. Accordingly, the radio resources required for the backhaul link in each of the radio base stations 10a and 10b can be reduced as compared with the radio resources required for the backhaul link in the radio base station 10a in Fig. 3B. In this way, in each of the radio base stations 10a and 10b, the radio resources required for the backhaul link can be reduced, thereby increasing radio resources that can be allocated to the macro terminal 20a and preventing reduction in capacity of the entire system.

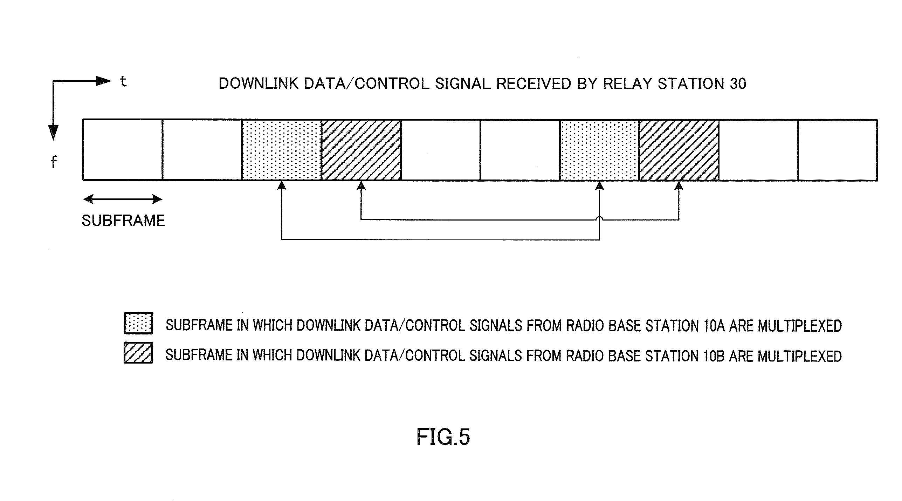

And, in the relay transmission system according to the present invention, the plural radio base stations 10a and 10b respectively transmit downlink data in mutually different subframes. Specifically, as illustrated in Fig. 5, the radio base station 10a allocates certain subframes fixedly or semi-fixedly as radio resources for the backhaul link with the relay station 30. Further, the radio base station 10b allocates subframes different from those allocated by the radio base station 10a, fixedly or semi-fixedly as radio resources for the backhaul link between the radio base station 10b and the relay station 30. Here, the subframes allocated as the radio resources for the backhaul link in each of the radio base stations 10a and 10b may be determined in advance or determined to be different from each other by signaling between the radio base stations 10a and 10b.

In such relay transmission, as the downlink data from the radio base stations 10a and 10b to the relay station 30 are time division multiplexed in mutually different subframes and transmitted, the relay station 30 can receive the downlink data from the radio base stations 10a and 10b properly.

Further, in the relay transmission method according to the present invention, one radio base station 10a of the radio base stations 10a and 10b illustrated in Fig. 4 may transmit a control signal (for example, R-PDCCH) used for the relay station 30 to receive the downlink data (for example, R-PDSCH). In this case, the downlink data may be transmit only from the base station 10b to the relay station 30 or from both of the radio base stations 10a and 10b to the relay station 30.

Or, in the relay transmission method according to the present invention, both of the radio base stations 10a and 10b illustrated in Fig. 4 may transmit the downlink data (R-PDSCH) as well as the control signals (R-PDCCH) for the relay station 30 to receive the downlink data to the relay station 30.

Further, in the relay transmission method according to the present invention, as illustrated in Fig. 3B, the radio base station 10a that independently transmits the downlink data to the relay station 30 may determine whether or not to transmit the downlink data from both of the radio base stations 10a and 10b to the relay station 30 as illustrated in Fig. 4, based on applying determination information described later. When it is determined that the downlink data should be transmitted from both of the radio base stations 10a and 10b to the relay station 30 as illustrated in Fig. 4 based on the applying determination information described later, the radio base station 10a requires the radio base station 10b to transmit the downlink data to the relay station 30, and transmission to the relay station 30 is started from both of the radio base stations 10a and 10b. Further, in this case, the radio base station 10a may determine distribution of the downlink data to transmit and provide the radio base station 10b with instructions of the downlink data to transmit.

Here, the above-mentioned applying determination information includes the number of relay terminals 20b connected to the relay station 30, reception quality of signals from the radio base station 10a in the relay station 30, data request information of the relay terminal 20b connected to the relay station 30, the number of relay stations 30 in a cell of the radio base station 10a, the number of macro terminals 20a connected to the radio base station 10a, reception quality of downlink signals from the radio base station 10a in the macro terminal 20a and data request information of the macro terminal 20a, which may be used alone or in combination.

### (1) In a case where the applying determination information is the number of relay terminals 20b

In this case, the radio base station 10a determines whether or not to transmit the downlink data to the relay station 30 from both of the radio base stations 10a and 10b, based on the number of relay terminals 20b connected to the relay station 30. Note that the number of relay terminals 20b is calculated for example, in the relay station 30, based on uplink signals from the relay terminals 20 connected to the relay station 30. The number of relay terminals 20b is reported from the relay station 30 to the radio base station 10a.

For example, when the number of relay terminals 20b connected to the relay station 30 exceeds a predetermined value, the radio base station 10a illustrated in Fig. 3B determines that the downlink data to the relay station 30 should be transmitted from both of the radio base stations 10a and 10b and requests the radio base station 10b to transmit the downlink data to the relay station 30. As a result, transmission to the relay station 30 from both of the radio base stations 10a and 10b as illustrated in Fig. 4 is started and in the radio base station 10a, it is possible to reduce the radio resources required for the backhaul link. Accordingly, it is possible to prevent shortage of radio resources that can be allocated to the macro terminal 20a connected to the radio base station 10a, due to the increase in number of the relay terminals 20b.

### (2) In a case where the applying determination information is reception quality of the relay station 30

In this case, the radio base station 10a determines whether or not to transmit the downlink data to the relay station 30 from both of the radio base stations 10a and 10b based on the reception quality of the relay station 30. Note that the reception quality of the relay station 30 is, for example, reception quality of downlink signals from the radio base station 10 measured in the relay station 30, and is reported from the relay station 30 to the radio base station 10a.

For example, when the reception quality of the relay station 30 is reduced below a predetermined value, the radio base station 10a illustrated in Fig. 3B determines that the downlink data to the relay station 30 should be transmitted from both of the radio base stations 10a and 10b and requests the radio base station 10b to transmit the downlink data to the relay station 30. As a result, transmission to the relay station 30 from both of the radio base stations 10a and 10b as illustrated in Fig. 4 is started and in the radio base station 10a, it is possible to reduce the radio resources required for the backhaul link. Consequently, it is possible to prevent shortage of radio resources that can be allocated to the macro terminal 20a connected to the radio base station 10a due to improvement of reception quality of the relay station 30.

### (3) In a case where the applying determination information is data request information of relay terminal 20b

In this case, the radio base station 10a determines whether or not to transmit the downlink data to the relay station 30 from both of the radio base stations 10a and 10b based on the data request information of the relay terminal 20b connected to the relay station 30. Note that the data request information of the relay terminal 20b is, for example, information indicating the type of data requested by the relay terminal 20b, and shows, for example, the data is large-volume data such as video or small-volume data such as speech. The data request information is reported from the relay terminal 20b via the relay station 30 to the radio base station 10a.

For example, when the data request information of the relay terminal 20b connected to the relay station 30 indicates large-volume data, the radio base station 10a illustrated in Fig. 3B determines that the downlink data to the relay station 30 should be transmitted from both of the radio base stations 10a and 10b and requests the radio base station 10b to transmit the downlink data to the relay station 30. As a result, transmission to the relay station 30 from both of the radio base stations 10a and 10b as illustrated in Fig. 4 is started and in the radio base station 10a, it is possible to reduce the radio resources required for the backhaul link. Consequently, it is possible to prevent shortage of radio resources that can be allocated to the macro terminal 20a connected to the radio base station 10a due to transmission of large-volume data to the relay terminal 20b.

### (4) In a case where the applying determination information is the number of relay stations 30

In this case, the radio base station 10a determines whether or not to transmit the downlink data to the relay station 30 from both of the radio base stations 10a and 10b based on the number of relay stations 30 in a cell of the radio base station 10a. Note that the number of relay stations 30 in the cell of the radio base station 10 is calculated in the radio base station 10a based on uplink signals from the relay stations 30. This is because each relay station 30 may be either of fixed type and moving type and the number of relay stations 30 varies by moving-type relay stations 30 moving into or out of the cell.

For example, when the number of relay stations 30 in the cell of the radio base station 10a exceeds a predetermined value, the radio base station 10a illustrated in Fig. 3B determines that the downlink data to the relay station 30 should be transmitted from both of the radio base stations 10a and 10b and requests the radio base station 10b to transmit the downlink data to the relay station 30. As a result, transmission to the relay station 30 from both of the radio base stations 10a and 10b as illustrated in Fig. 4 is started and in the radio base station 10a, it is possible to reduce the radio resources required for the backhaul link. Consequently, it is possible to prevent shortage of radio resources that can be allocated to the macro terminal 20a connected to the radio base station 10a due to increase in number of relay stations 30.

### (5) In a case where the applying determination information is the number of macro terminals 20a

In this case, the radio base station 10a determines whether or not to transmit the downlink data to the relay station 30 from both of the radio base stations 10a and 10b based on the number of macro terminals to be connected to the radio base station 10. Note that the number of macro terminals 20a is, for example, calculated in the radio base station 10a based on uplink signals from the respective macro terminals 20a to be connected to the radio base station 10a.

For example, when the number of macro terminals 20a to be connected to the radio base station 10a exceeds a predetermined value, the radio base station 10a illustrated in Fig. 3B determines that the downlink data to the relay station 30 should be transmitted from both of the radio base stations 10a and 10b and requests the radio base station 10b to transmit the downlink data to the relay station 30. As a result, transmission to the relay station 30 from both of the radio base stations 10a and 10b as illustrated in Fig. 4 is started and in the radio base station 10a, it is possible to reduce the radio resources required for the backhaul link. Consequently, it is possible to allocate more radio resources to the macro terminals 20a as far as it can tolerate the increase in number of macro terminals 20a.

### (6) In a case where the applying determination information is reception quality of the macro terminal 20a

In this case, the radio base station 10a determines whether or not to transmit the downlink data to the relay station 30 from both of the radio base stations 10a and 10b based on the reception quality of the macro terminal 20a connected to the radio base station 10a. Note that the reception quality of the macro terminal 20a is, for example, reception quality of downlink signals from the radio base station 10a measured in the macro terminal 20a, and is reported from the macro terminal 20a to the radio base station 10a.

For example, when the reception quality of the macro terminal 20a connected to the radio base station 10a is reduced below a predetermined value, the radio base station 10a illustrated in Fig. 3B determines that the downlink data to the relay station 30 should be transmitted from both of the radio base stations 10a and 10b and requests the radio base station 10b to transmit the downlink data to the relay station 30. As a result, transmission to the relay station 30 from both of the radio base stations 10a and 10b as illustrated in Fig. 4 is started and in the radio base station 10a, it is possible to reduce the radio resources required for the backhaul link. Consequently, it is possible to allocate more radio resources to the macro terminal 20a for improvement of the reception quality of the macro terminal 20a.

### (7) In a case where the applying determination information is data request information of the macro terminal 20a

In this case, the radio base station 10a determines whether or not to transmit the downlink data to the relay station 30 from both of the radio base stations 10a and 10b based on the data request information of the macro terminal 20a connected to the radio base station 10a. Note that the data request information of the macro terminal 20a is information indicating the type of data requested to be transmitted to the macro terminal 20a by the radio base station 10a, and shows, for example, the data is large-volume data such as video and small-volume data such as speech. The data request information is reported from the macro terminal 20a to the radio base station 10.

For example, when the data request information of the macro terminal 20a connected to the radio base station 10a indicates large-volume data, the radio base station 10a illustrated in Fig. 3B determines that the downlink data to the relay station 30 should be transmitted from both of the radio base stations 10a and 10b and requests the radio base station 10b to transmit the downlink data to the relay station 30. As a result, transmission to the relay station 30 from both of the radio base stations 10a and 10b as illustrated in Fig. 4 is started and in the radio base station 10a, it is possible to reduce the radio resources required for the backhaul link. Consequently, it is possible to allocate more radio resources to the macro terminal 20a so as to transmit the large volume data to the macro terminal 20a.

Here, determination based on the applying determination information described above may be performed by a higher apparatus above the radio base stations 10a and 10b. In this case, the higher apparatus requests the radio base stations 10a and 10b to transmit the downlink data to the relay station 30 and transmission to the relay station 30 is started from both of the radio base stations 10a and 10b.

In the relay transmission method according to the present invention described above, the radio base station 10a may be any of Node B, eNode B, BDE (Base station Digital Equipment) and so on. And, the radio base station 10b may be any radio base station having equivalent functions to the radio base station 10a, such as, Node B, eNode B, or BDE (Base station Digital Equipment). Or, the radio base station 10b may be a radio base station acting as a slave of the radio base station 10a such as, for example, RRE (Remote Radio Equipment) connected to the BDE by an optical fiber. In the following description, the radio base stations 10a and 10b are collectively referred to as radio base stations 10 if they are treated indiscriminately. And, the number of radio base stations 10 is not limited to two illustrated in Fig. 4 and the above-mentioned relay transmission method may be applied as appropriate to three or more radio base stations 10.

Further, in the relay transmission method according to the present invention described above, the downlink data to the relay station 30 from the plural radio base stations 10 is time division multiplexed in mutually different subframes and transmitted. However, the downlink data to the relay station 30 from the radio base stations 10 may be frequency division multiplexed or code division multiplexed in the same subframes and transmitted.

Further, in the relay transmission method according to the present invention described above, the distribution of the downlink data for the relay station 30 to the plural radio base stations 10 may be determined by one radio base station 10 (for example, radio base station 10a) or by a higher apparatus above the plural radio base stations 10. If the distribution is determined by one radio base station 10, the data distribution information determined by the radio base station 10 (for example, radio base station 10a) may be transmitted to other radio base stations 10 via inter-base station interfaces. Or, if the distribution is determined by the higher apparatus, data transmission from each of the radio base stations 10 to the relay station 30 is performed in accordance with the data distribution information transmitted from the higher apparatus to the radio base stations 10.

With reference to the accompanying drawings, an embodiment of the present invention will be described in detail below.

### <FIRST EMBODIMENT>

The first embodiment is described on the assumption that determination based on the above-mentioned applying determination information and determination of the distribution of downlink data to the radio base stations 10 are performed by a radio base station 10.

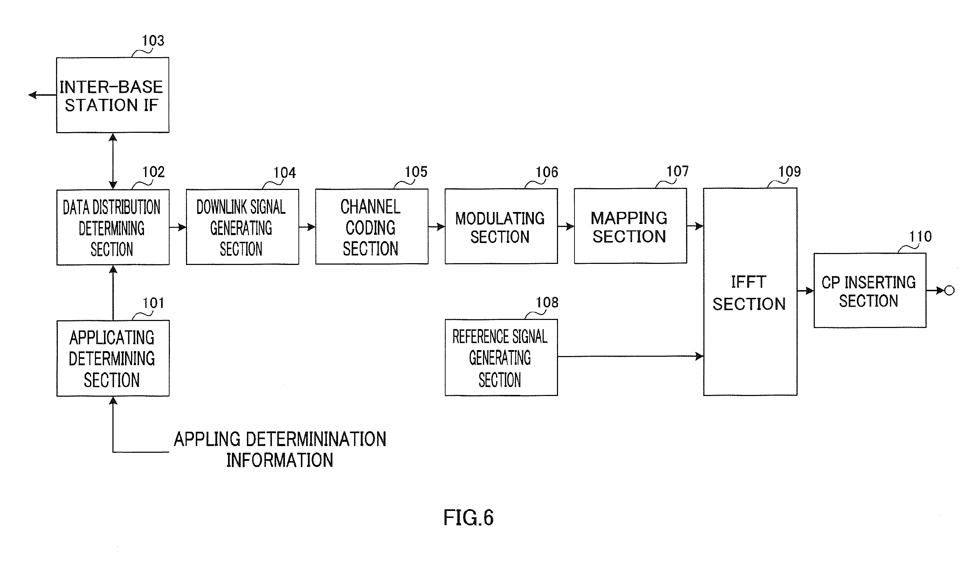

Fig 6 is a block diagram illustrating a configuration of the radio base station according to the first embodiment. The radio base station 10 illustrated in Fig. 6 has a transmitting section for downlink signals and a receiving section for uplink signals. Here, description is made principally about the configuration of the transmitting section for downlink signals.

As illustrated in Fig. 6, the radio base station 10 has an applying determining section 101 (determining section), a data distribution determining section 102, an inter-base station IF (InterFace) 103, a downlink signal generating section 104, a channel coding section 105, a modulating section 106, a mapping section 107, a reference signal generating section 108, an IFFT section 109 and a CP inserting section 110.

The applying determining section 101 determines whether or not to transmit the downlink data to the relay station 30 from each of the radio base stations 10. Concretely, the applying determining section 101 determines whether or not to transmit the downlink data to the relay station 30 from each of the radio base stations 10 based on applying determination information as described above. When it determines that the downlink data should be transmitted from each of the radio base stations 10 to the relay station 30, the applying determining section 101 outputs a control signal of the determination result to the data distribution determining section 102.

Here, as described above, the applying determination information includes the number of relay terminals 20b connected to the relay station 30, reception quality of signals from the radio base station 10a in the relay station 30, data request information of the relay terminal 20b connected to the relay station 30, the number of relay stations 30 in a cell of the radio base station 10a, the number of macro terminals 20a connected to the radio base station 10a, reception quality of signals from the radio base station 10a in the macro terminal 20a and data request information of the macro terminal 20a, which may be used alone or in combination.

When it is determined by the applying determining section 101 that the downlink data should be transmitted from each of the radio base stations 10 to the relay station 30, the data distribution determining section 102 determines the distribution of downlink data to the radio base station and other radio base stations 10. The data distribution determining section 102 outputs the data distribution information indicating downlink data distributed to the other base stations 10, to the inter-base station interface (IF) 103, and outputs the data distribution information indicating downlink data distributed to the base station, to the downlink signal generating section 104. Note that the other radio base stations 10 may be determined in advance or reported dynamically based on load information from the higher apparatus above the radio base station.

The inter-base station interface (IF) 103 performs transmission and reception of signals with the other radio base stations 10. Specifically, when applying of the distribution transmission is determined by the applying determining section 101, the inter-base station interface 103 transmits the data distribution information received as input from the data distribution determining section 102, to the other radio base stations 10.

The downlink signal generating section 104 generates downlink signals. The downlink signals include downlink data such as PDSCH for the macro terminal 20a and R-PDSCH for the relay terminal 20b and control signals such as PDCCH for the macro terminal 20a and R-PDCCH for the relay terminal 20b. The downlink signal generating section 104 outputs the generated downlink signals to the channel coding section 105.

Particularly, when it is determined by the applying determining section 101 that the downlink data to the relay station 30 should be transmitted from each of plural radio base stations 10, the downlink signal generating section 104 generates the downlink data (R-PDSCH) based on the data distribution information received as input from the data distribution determining section 102. And, the downlink signal generating section 104 generates control signals (R-PDCCH) for the relay station 30 to receive the downlink data (R-PDSCH).

The channel coding section 105 performs channel coding on the downlink signals received as input from the downlink signal generating section 104. The channel coding section 105 outputs the channel-coded downlink signals to the modulating section 106. The modulating section 106 modulates the channel-coded downlink signals. The modulating section 106 outputs the modulated downlink signals to the mapping section 107.

The mapping section 107 maps the downlink signals received as input from the modulating section 106, to subcarriers based on the resource allocation information. The mapping section 107 outputs the mapped downlink signals to the IFFT section 109. Note that the resource allocation information is information indicating radio resources allocated to the input downlink signals. The downlink signals for the relay station 30 are allocated to subframes prepared fixedly or semi-fixedly for the backhaul link, as described above.

The signal generating section 108 generates reference signals and outputs the reference signals to the IFFT section 109. The IFFT section 109 performs IFFT on the downlink signals received as input from the mapping section 107 and the reference signals received as input from the reference signal generating section 108 and converts them into time domain signals. The IFFT section 109 outputs the signals having been subjected to IFFT, to the CP inserting section 110. The CP inserting section 110 inserts CPs to the signals having been subjected to IFFT. Note that the signals to which CPs are inserted are transmitted to the relay station 30 or to the macro terminal 20a.

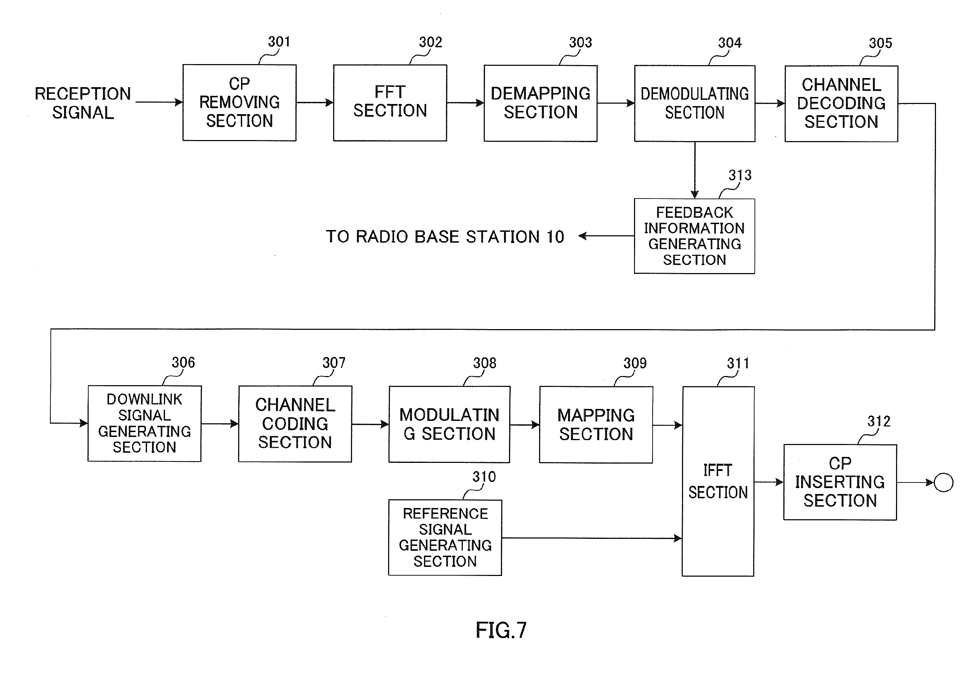

Fig. 7 is a block diagram illustrating a configuration of the relay station according to the first embodiment. The relay station 30 illustrated in Fig. 7 has a receiving section for receiving downlink signals from the radio base station 10 and receiving uplink signals from the relay terminal 20b, and a transmitting section for transmitting downlink signals to the relay terminal 20b and transmitting uplink signals to the radio base station 10. Note that description is made principally about the configuration of the receiving section for receiving the downlink signals from the radio base station 10 and the transmitting section for transmitting the downlink signals to the relay terminal 20b.

As illustrated in Fig. 7, the relay station 30 has a CP removing section 301, an FFT (Fast Fourier Transform) section 302, a demapping section 303, a demodulating section 304, a channel decoding section 305, a downlink signal generating section 306, a channel coding section 307, a modulating section 308, a mapping section 309, a reference signal generating section 310, an IFFT section 311, a CP inserting section 312 and a feedback information generating section 313.

The CP removing section 301 removes CPs added to reception signals from the radio base station 10. The CP removing section 301 outputs the CP-removed signals to the FFT section 302. The FFT section 302 performs FFT processing on the CP-removed signals. The FFT section 302 outputs the signals having been subjected to FFT, to the demapping section 303. The demapping section 303 demaps the signals having been subjected to FFT and outputs the demapped signals to the demodulating section 304. The channel decoding section 305 performs channel decoding on the downlink data demodulated by the demodulating section 304. The channel decoding section 305 outputs the channel-decoded downlink data to the downlink signal generating section 306.

The downlink signal generating section 306 generates downlink signals based on the downlink data decoded by the channel decoding section 305 and outputs the downlink signals to the channel coding section 307. Notes that the downlink signals include downlink data (PDSCH) to the relay terminal 20b and control signals (PDCCH) for the relay terminal 20b to receive the downlink data.

The channel coding section 307 performs channel coding on the downlink signals received as input from the downlink signal generating section 306 and outputs the downlink signals to the modulating section 308. The modulating section 308 modulates the channel-coded data. The modulating section 308 outputs the data-modulated downlink signals to the mapping section 309.

The mapping section 309 maps the downlink signals received as input from the modulating section 308, to subcarriers based on the resource allocation information. The mapping section 309 outputs the mapped downlink signals to the IFFT section 311. The reference signal generating section 310 generates reference signals and outputs the reference signals to the IFFT section 311. The IFFT section 311 performs IFFT on the downlink signals received as input from the mapping section 309 and the reference signals received as input from the reference signal generating section 310 and converts these signals into time domain signals. The IFFT section 311 outputs the signals having been subjected to IFFT, to the CP inserting section 312. The CP inserting section 312 inserts CPs to the signals having been subjected to IFFT. The CP-inserted signals are transmitted to the relay terminal 20b.

The feedback information generating section 313 generates feedback information for the ratio base station 10. Note that the feedback information includes reception quality of downlink signals which are received from the radio base station 10 and demodulated by the demodulating section 304, the number of relay terminals 20b connected to the relay station 30, data request information of the relay terminal 20b connected to the relay station 30, and so on. This feedback information is reported to the radio base station 10 and used as the above-mentioned applying determination information in the radio base station 10.

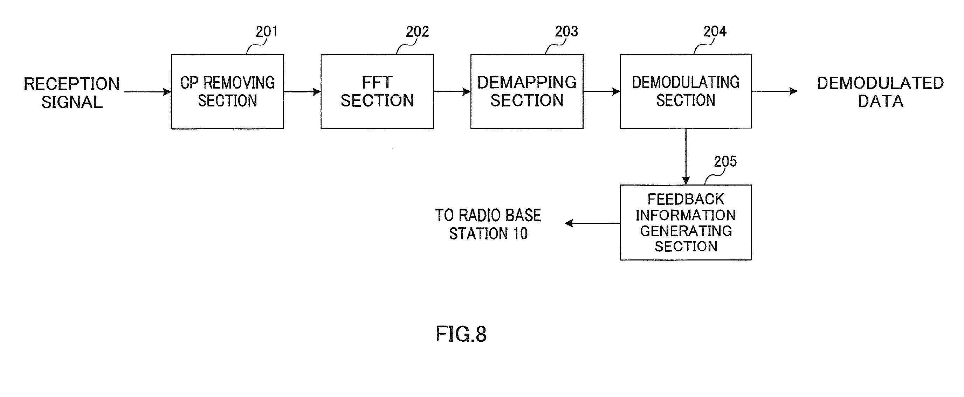

Fig. 8 is a block diagram illustrating a configuration of the macro terminal according to the first embodiment. The macro terminal 20a illustrated in Fig. 8 has a receiving section for receiving downlink signals and a transmitting section for transmitting uplink signals. Description here is made principally about the configuration of the receiving section for downlink signals.

As illustrated in Fig. 8, the macro terminal 20a has a CP removing section 201, an FFT (Fast Fourier Transform) section 202, a demapping section 203, a demodulating section 204 and a feedback information generating section 205.

The CP removing section 201, the FFT section 202, the demapping section 203 and the demodulating section 204 have the same functions as the CP removing section 301, the FFT section 302, the demapping section 303 and the demodulating section 304 described above, and their explanation is omitted here.

The feedback information generating section 205 generates feedback information for the radio base station 10. Note that the feedback information include reception quality of downlink signals which are received from the radio base station 10 and demodulated by the demodulating section 204, data request information from the macro terminal 20a to the radio base station 10, and so on. This feedback information is reported to the radio base station 10 and is used as the above-mentioned applying determination information in the radio base station 10.

In the thus-configured radio communication system performing relay transmission, the backhaul link (first radio link) is established between each of radio base stations 10 and the relay station 30 and the access link (second radio link) is established between the relay station 30 and the relay terminal 20b. Each of the radio base stations 10 transmits the distributed downlink data to the relay station 30 by using the established backhaul link. The relay station 30 transmits the downlink data received from the radio base stations 10a and 10b, to the relay terminal 20b by using the access link.

In this way, according to the present invention, each of the plural radio base stations 10 transmits downlink data to the relay station 30 by using the backhaul link. Therefore, the radio resources required for the backhaul link in each of the radio base stations 10 can be reduced as compared with radio resources required for single transmission of one radio base station 10. Therefore, in each of the radio base stations 10, it is possible to reduce the radio resources required for the backhaul link, thereby increasing radio resources allocatable to the macro terminal 20a and preventing the reduction in capacity of the entire system.

The embodiment described here has been given for illustrative purposes in all the points and is by no means limiting. The scope of the present invention is defined by the claims, but not by the above-described embodiment only. It should be understood that the scope of the present invention includes equivalences and all modifications to the claims.

The disclosure of Japanese Patent Application No. 2010-181910, filed on August 16, 2010, including the specification, drawings, and abstract, is incorporated herein by reference in its entirety.

## Claims

1. A relay transmission method comprising the steps of:
transmitting, at each of a plurality of radio base stations, downlink data to a relay station by using a first radio link established between each of the plurality of radio base station and the relay station; and
transmitting, at the relay station, the downlink data received from each of the plurality of radio base stations to a mobile terminal by using a second radio link established between the relay station and the mobile terminal.

2. The relay transmission method of claim 1, wherein in the transmitting step, the plurality of radio base stations transmit the downlink data to the relay station in mutually different subframes.

3. The relay transmission method of claim 1 or 2, wherein in the transmitting step, one radio base station of the plurality of radio base stations transmits a control signal to be used in receiving the downlink data, to the relay station.

4. The relay transmission method of claim 1, further comprising the step of determining, at one radio base station of the plurality of radio base stations, whether or not to transmit the downlink data to the relay station from each of the plurality of radio base stations, and
when it is determined that the downlink data should be transmitted to the relay station from each of plurality of the radio base stations, each of plurality of the radio base stations transmits the downlink data to the relay station.

5. The relay transmission method of claim 4, wherein in the determining step, determining whether or not to transmit the downlink data to the relay station from each of the plurality of radio base stations, based on at least one of a number of mobile terminals connected to the relay station, reception quality of a downlink signal at the relay station, data request information of the mobile terminal connected to the relay station, a number of relay stations in a cell of the one radio base station, a number of mobile terminals connected to the one radio base station, reception quality of a downlink signal at the mobile terminal connected to the one radio base station, and data request information of the mobile terminal connected to the one radio base station.

6. A relay station comprising:
a receiving section configured to receive downlink data from each of a plurality of radio base stations by using a first radio link established between each of the plurality of radio base stations and the relay station; and
a transmitting section configured to transmit downlink data received from each of the plurality of radio base stations to a mobile terminal by using a second radio link established between the relay station and the mobile terminal.

7. The relay station of claim 6, wherein the receiving section is configured to receive the downlink data from the plurality of radio base stations in mutually different subframes.

8. The relay station of claim 6 or 7, wherein the receiving section is configured to receive a control signal to be used in receiving the downlink data, from one radio base station of the plurality of radio base stations.

9. A radio base station comprising:
a determining section configured to determine distribution of downlink data from a plurality of radio base stations to a relay station; and
a transmitting section configured to transmit the downlink data distributed to the radio base station by the determining section, to the relay station by using a radio link established between the relay station and the radio base station.

10. The radio base station of claim 9, wherein the transmitting section is configured to transmit the downlink data distributed to the radio base station, in a subframe that is different from a subframe used by another radio base station.

11. The radio base station of claim 9 or 10, wherein the transmitting section is configured to transmit a control signal for receiving the downlink data distributed to each of the plurality of radio base stations, to the relay station.

12. The radio base station of claim 9, further comprising
a determining section configured to determine whether or not to transmit the downlink data to the relay station from each of the plurality of radio base stations, wherein
the determining section is configured to determine the distribution when it is determined by the determining section that the downlink data should be transmitted to the relay station from each of the plurality of radio base stations and
the transmitting section is configured to transmit the downlink data distributed to the radio base station, to the relay station.

13. The radio base station of claim 12, wherein the determining section is configured to determine whether or not to transmit the downlink data to the relay station from each of the plurality of radio base stations, based on at least one of a number of mobile terminals connected to the relay station, reception quality of a downlink signal at the relay station, data request information of the mobile terminal connected to the relay station, a number of relay stations in a cell of the radio base station, a number of mobile terminals connected to the radio base station, reception quality of a downlink signal at the mobile terminal connected to the radio base station, and data request information of the mobile terminal connected to the radio base station.
